# EUROPEAN PATENT APPLICATION

(11) **EP 4 437 862 A1**
(43) Date of publication of application: **02.10.2024**
(21) Application number: 21965613.9
(22) Date of filing: 25.11.2021
(51) Int. Cl.: A24C 5/34, A24D 3/02

(54) **INSPECTION DEVICE AND INSPECTION METHOD FOR FILTER**

(71) Applicant: Japan Tobacco, Inc., Tokyo, 105-6927 (JP)
(72) Inventor: KOBAYASHI, Shota, Tokyo 130-8603 (JP); NAKAMURA, Satoshi, Tokyo 130-8603 (JP); IMUTA, Masahiro, Tokyo 130-8603 (JP); MATSUMOTO, Yoshitaka, Tokyo 130-8603 (JP); ODAHARA, Akari, Tokyo 130-8603 (JP)
(74) Representative: Hoffmann Eitle
(86) International application number: PCT/JP2021/043193
(87) International publication number: WO 2023/095241

(57) **Abstract**

An inspection device 50 for a filter 4 inspects the filter 4, which is provided to a flavor inhalation article 1. The filter 4 is provided with a mouthpiece end 16, a solid material 12, and a communication path 24 that communicates with the solid material 12 and opens to the mouthpiece end 16. The inspection device 50 is provided with: an illumination 52 for irradiating an inspection light onto the mouthpiece end 16 in an irradiation direction that extends along the axial direction X; a camera 54 for photographing the peripheral surface of the filter 4 in a photographing direction that extends along the radial direction Y of the filter 4; an image processing unit 62 for processing an image photographed by the camera 54 and detecting a shadow 68 of the solid material 12; and, an assessment unit 64 for assessing the presence or absence and the quality of the solid material 12 on the basis of the shadow 68 detected by the image processing unit 62.

## Description

### Technical Field

The present invention relates to an inspection device and an inspection method for a filter, and, specifically, relates to an inspection device and an inspection method that inspect a powder containing material disposed in a filter.

### Background Art

PTL 1 discloses an inspection device that inspects a continuous body, which is an intermediate product of a filter. In the continuous body, a capsule filled with a content liquid containing, for example, a flavoring agent is disposed in a space between filter elements that are arranged side by side in an axial direction, in other words, in a cavity. The inspection device is disposed at an inspection position situated on a transport line between a windup section and a cutter, and performs irradiation with infrared light including an infrared ray from an infrared light irradiation unit disposed above the continuous body.

The infrared light is transmitted through moldable paper, in other words, an outer plug wrapper, the capsule, and an outer plug wrapper, and transmitted infrared light is emitted downward from the continuous body. The transmitted infrared light is detected by an infrared sensor or is subjected to photographing by an infrared camera, and a detection signal or a photographing signal is transmitted to an assessment unit. The assessment unit assesses the quality of the content liquid with which the capsule is filled based on the detection signal or the photographing signal.

On the other hand, PTL 2 discloses a filter including an upstream filter portion, a downstream filter portion, and a powder containing material. The upstream filter portion is adjacent to a flavor element, such as a tobacco rod, in an axial direction. The downstream filter portion includes a mouthpiece end of a flavor inhalation article, such as a smoking article. The powder containing material becomes powder when raw material powder containing at least one of a taste component and a flavor component is molded into one lump and an external force is applied.

A cavity is formed in the filter. The cavity is formed by disposing the upstream filter portion and the downstream filter portion apart from each other in the axial direction and wrapping them with an outer plug wrapper, and the powder containing material is disposed in the cavity. A powder supply path is formed in the downstream filter portion. The powder supply path causes the cavity and the mouthpiece end to communicate with each other, and allows powder to be supplied from the cavity to the mouthpiece end.

The powder containing material is crushed as a result of a user applying an external force to the powder containing material by, for example, crushing the powder containing material with his fingers when the user inhales the flavor inhalation article. The user inhales the crushed powder from the mouthpiece end through the powder supply path. The filter formed in this way is connected to a peripheral surface of the outer plug wrapper and a peripheral surface of an end portion of a flavor element by wrapping them with tipping paper. Therefore, the filter constitutes a part of the flavor inhalation article.

### Citation List

### Patent Literature

PTL 1: International Publication No. 2013/005641
PTL 2: International Publication No. 2016/181843

### Summary of Invention

### Technical Problem

In a manufacturing process or a transporting process of the filter, and thus the flavor inhalation article, the powder containing material may be subjected to a shock and as a result may be chipped, cracked, crushed, or the like. In the manufacturing process of the filter, the powder containing material may not be successfully disposed in the cavity. Since the chipping, cracking, crushing, and absence of the powder containing material reduce the quality of the filter and thus the flavor inhalation article, such a defective flavor inhalation article needs to be eliminated before being shipped as a product.

Therefore, an inspection of the presence or absence and the quality of the powder containing material by using the inspection device described in PTL 1 may be considered. However, an inspection object in PTL 1 is an internal liquid of a capsule, whereas the powder containing material is a solid, as a result of which an inspection using transmitted infrared light is not realistic. In addition, since the inspection device described in PTL 1 inspects a continuous body, which is an intermediate product of the filter, infrared light, which is inspection light, is successively transmitted through the outer plug wrapper, the capsule, and the outer plug wrapper, and transmitted infrared light transmitted through two paper webs in addition to the capsule, which is an inspection object, is used in the inspection.

On the other hand, suppose that, in a state in which other structural elements are connected to the filter and in which the flavor inhalation article is molded, the powder containing material is inspected by using the inspection device of PTL 1. In this case, after the infrared light, which is inspection light, has been transmitted through tipping paper and the outer plug wrapper, with the powder containing material being disposed apart therefrom, the infrared light is successively transmitted through the outer plug wrapper and tipping paper on the opposite side. That is, transmitted infrared light that is transmitted through four paper webs in addition to the powder containing material, which is an inspection object, is used in the inspection. Therefore, since the transmitted infrared light that is transmitted through twice the number of paper webs as compared to that in the case in PTL 1 is used in the inspection, the inspection precision is reduced.

The present invention has been made in view of such problems, and it is an object of the present invention to provide an inspection device and an inspection method for a filter, which are capable of efficiently inspecting with high precision in a flavor inhalation article the absence or presence and the quality of a solid material, such as a powder containing material, disposed in a filter, and which are capable of improving the quality of the filter and thus the flavor inhalation article.

### Solution to Problem

To this end, an inspection device for a filter according to an aspect is an inspection device that inspects the filter that is provided at a flavor inhalation article, in which the filter includes a mouthpiece end, a solid material, and a communication path that communicates with the solid material and opens to the mouthpiece end, and in which the inspection device includes an illumination that irradiates the mouthpiece end with inspection light in an irradiation direction along an axial direction; a camera that photographs a peripheral surface of the filter in a photographing direction along a radial direction of the filter; an image processing unit that processes an image photographed by the camera and detects a shadow of the solid material; and an assessment unit that assesses presence or absence and a quality of the solid material based on the shadow detected by the image processing unit.

An inspection method for a filter according to an aspect is an inspection method of inspecting the filter that is provided at a flavor inhalation article, in which the filter includes a mouthpiece end, a solid material, and a communication path that communicates with the solid material and opens to the mouthpiece end, and in which the inspection method includes an irradiation step of irradiating the mouthpiece end with inspection light in an irradiation direction along the axial direction; a photographing step of photographing a peripheral surface of the filter in a photographing direction along a radial direction of the filter; an image processing step of processing an image photographed in the photographing step and detecting a shadow of the solid material; and an assessment step of assessing presence or absence and a quality of the solid material based on the shadow detected in the image processing step.

### Advantageous Effects of Invention

It is possible to efficiently inspect with high precision in a flavor inhalation article the absence or presence and the quality of a solid material disposed in a filter and to improve the quality of the filter and thus the flavor inhalation article.

### Brief Description of Drawings

[Fig. 1] Fig. 1 is a perspective view of a flavor inhalation article.
[Fig. 2] Fig. 2 is a vertical sectional view along an axial direction of a main portion of Fig. 1.
[Fig. 3] Fig. 3 is a schematic view of a transport section of the flavor inhalation article and an inspection device of a filter.
[Fig. 4] Fig. 4 is a diagram of a main portion of Fig. 3 when seen from a side surface of a transport drum.
[Fig. 5] Fig. 5 is a diagram of an irradiation direction and an irradiation region of inspection light for irradiation from an illumination, and a photographing direction and a photographing region of a camera when the vertical section of the filter is enlarged.
[Fig. 6] Fig. 6 is a flowchart of an inspection by the inspection device.
[Fig. 7] Fig. 7 shows a photographed image when S < T1 does not hold in an assessment step S5.
[Fig. 8] Fig. 8 shows an example of a photographed image when S < T1 holds in the assessment step S5.
[Fig. 9] Fig. 9 shows an example of a photographed image when S ≥ T2 holds in an assessment step S6.
[Fig. 10] Fig. 10 shows a case in which a shadow of a wrap portion of an outer plug wrapper and a shadow of a wrap portion of tipping paper appear in a photographed image.
[Fig. 11] Fig. 11 shows a case in which contours of vent holes of the filter appear in a photographed image.
[Fig. 12] Fig. 12 shows a case in which a part of a logomark of the filter appears in a photographed image.
[Fig. 13] Fig. 13 is a side view of the inspection device disposed at a conveyor device that transports an article.
[Fig. 14] Fig. 14 is a top view of a main portion of Fig. 13.

### Description of Embodiments

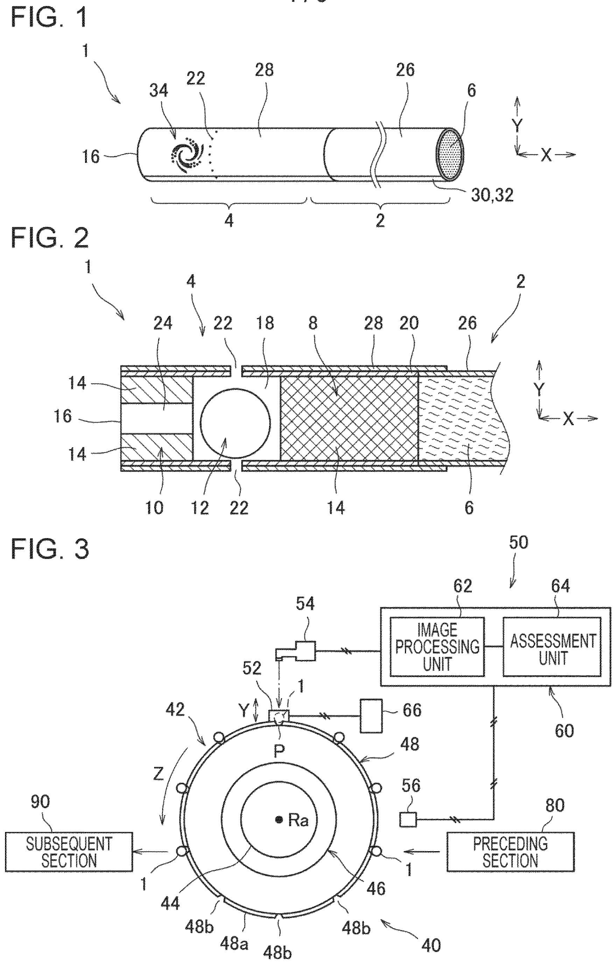

Fig. 1 is a perspective view of a flavor inhalation article and Fig. 2 is a vertical sectional view along an axial direction X of a main portion of Fig. 1. A flavor inhalation article 1 (hereunder may also be simply called "article") includes, for example, a flavor element 2 and a filter 4. The flavor element 2 is filled with a flavor material 6 molded in a rod shape. The filter 4 includes an upstream filter portion 8, a downstream filter portion 10, and a powder containing material (solid material) 12. An outer peripheral portion of the upstream filter portion 8 and an outer peripheral portion of the downstream filter portion 10 are filled with a filter material 14.

The upstream filter portion 8 is adjacent to the flavor element 2 in the axial direction X. The downstream filter portion 10 includes a mouthpiece end 16 of the article 1 on an outer end thereof in the axial direction X. The powder containing material 12 becomes powder when raw material powder containing at least one of a taste component and a flavor component is molded into one lump and an external force is applied. A cavity 18 is formed in the filter 4. The cavity 18 is formed by disposing the upstream filter portion 8 and the downstream filter portion 10 apart from each other in the axial direction X and wrapping them with an outer plug wrapper (wrapper) 20.

The powder containing material 12 is disposed in the cavity 18. A plurality of vent holes 22 for introducing air for ventilation into the filter 4 are formed in the cavity 18. A powder supply path (communication path) 24 is formed in the downstream filter portion 10. The powder supply path 24 causes the cavity 18 and the mouthpiece end 16 to communicate with each other, and allows powder to be supplied from the cavity 18 to the mouthpiece end 16.

The powder containing material 12 is a so-called powder ball, which is molded into a sphere, and is crushed as a result of a user applying an external force to the powder containing material 12 by, for example, crushing the powder containing material 12 with his fingers when the user inhales the article 1. The user inhales the crushed powder from the mouthpiece end 16 through the powder supply path 24. The filter 4 formed in this way is connected to the flavor element 2 by wrapping tipping paper (wrapper) 28 around a peripheral surface of the outer plug wrapper 20 and a peripheral surface of an outer plug wrapper 26 on an end portion of the flavor element 2.

This causes the filter 4 to constitute a part of the article 1. As shown in Fig. 1, the filter 4 is provided with wrap portions 30 and 32 formed, respectively, at the peripheral surface of the outer plug wrapper 20 and a peripheral surface of the tipping paper 28 along the axial direction X. The peripheral surface of the tipping paper 28 of the filter 4 may be printed with, for example, a logomark 34 that indicates the brand name of the article 1 near the position of the cavity 18.

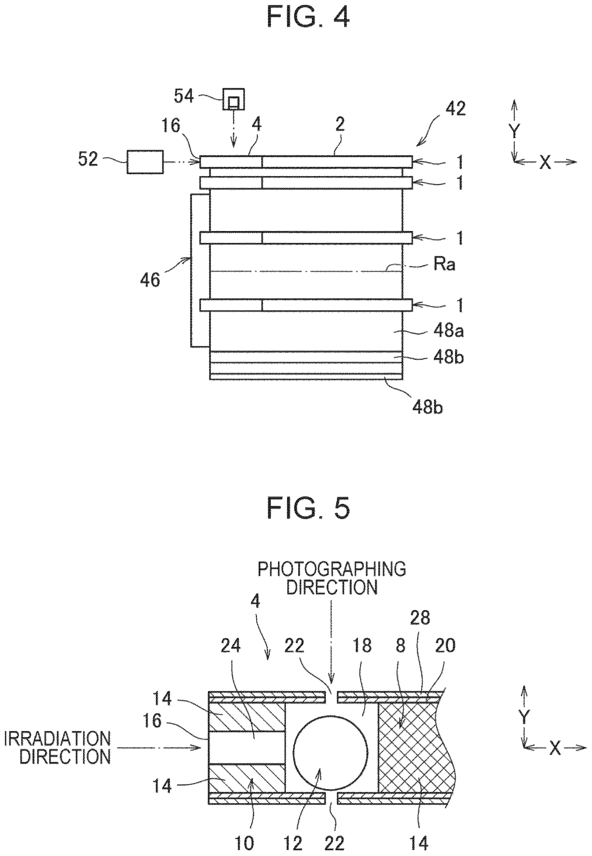

Fig. 3 is a schematic view of a transport section 40 of the article 1 and an inspection device 50 of the filter 4. Fig. 4 is a diagram of a main portion of Fig. 3 when seen from a side surface of a transport drum 42. The inspection device 50 is disposed at the transport section 40 of the article 1 and inspects the filter 4 of the article 1. The transport section 40 is constituted by a drum row in which the article 1 is transferred between a plurality of transport drums, and Figs. 3 and 4 show one transport drum 42 among the transport drums.

The article 1 manufactured at a preceding section 80 of the transport section 40 is, after being transported along a peripheral direction Z of the transport drum 42, supplied to a subsequent section 90, is processed, for example, is canned, and is shipped. The transport drum 42 includes a cylindrical core 46 in whose interior a suction source 44 is disposed, and a drum shell 48 that covers the cylindrical core 46. The drum shell 48 is disposed so as to be rotatable around a rotational axis Ra as a center with respect to the cylindrical core 46.

A plurality of holding grooves 48b that hold the article 1 are formed in an outer peripheral surface 48a of the drum shell 48 along the peripheral direction Z. A suction pressure from the suction source 44 is applied to each holding groove 48b. The drum shell 48 transports the article 1 along the peripheral direction Z while the article 1 is held by the suction pressure of the suction source 44 and at a holding groove 48b in the outer peripheral surface 48a of the drum shell 48 in an orientation in which the axial direction X of the article 1 is parallel to the rotational axis Ra.

The article 1 is held by the outer peripheral surface 48a in an orientation in which each of the wrap portions 30 and 32 of the article 1 is on the side of the outer peripheral surface 48a of the drum shell 48. That is, in a state in which the article 1 is held by the holding groove 48b of the drum shell 48, the wrap portions 30 and 32 do not appear in the external appearance of the filter 4. As shown in Fig. 3, the inspection device 50 includes an illumination 52, a camera 54, a sensor 56, and a control unit 60.

The control unit 60 includes an image processing unit 62 and an assessment unit 64. The camera 54 and the sensor 56 are electrically connected to the control unit 60. Electrical power is supplied to the illumination 52 from a power source 66. Note that electrical power may be supplied to the illumination 52 from the control unit 60. A display unit (not shown) that displays a photographed image photographed by the camera 54 may be provided.

Fig. 5 is a diagram of an irradiation direction and an irradiation region of inspection light for irradiation from the illumination 52, and a photographing direction and a photographing region of the camera 54 when the vertical section of the filter 4 is enlarged. The illumination 52 irradiates the mouthpiece end 16 with the inspection light in the irradiation direction along the axial direction X. The inspection light is infrared light including near an infrared ray, which is a predetermined wavelength range. The wavelength range of the inspection light is preferably set within a range in which, though a shadow of the powder containing material 12 appears in a monochromatic photographed image obtained by photographing the filter 4 with the camera 54, a contour of each vent hole 22 and a shadow of the logomark 34 do not appear in the monochromatic photographed image.

Specifically, the wavelength range of the inspection light is preferably 900 µm to 1700 µm, is more preferably 1000 µm to 1600 µm, and is even more preferably 1100 µm to 1500 µm. By also adjusting the light quantity of the inspection light in accordance with the wavelength of the inspection light, it is possible to adjust the photographed image photographed by the camera 54. The camera 54 is an infrared camera that is capable of performing a photographing operation using an infrared ray, and photographs at least a region where the powder containing material 12 exists of the filter 4 at the peripheral surface of the tipping paper 28 in the photographing direction along the radial direction Y of the filter 4.

The sensor 56 detects a sending of the article 1 into the transport drum 42, and outputs a photographing start signal to the control unit 60. Specifically, the camera 54 is fixed to an outer side of the outer peripheral surface 48a of the drum shell 48 in the radial direction Y by a bracket (not shown). The camera 54 photographs a peripheral surface of the filter 4 that is on a side opposite to each of the wrap portions 30 and 32 in the radial direction Y, in other words, the peripheral surface of the tipping paper 28. On the other hand, the illumination 52 is fixed to an outer side of the outer peripheral surface 48a of the drum shell 48 in the axial direction X by a bracket (not shown), and irradiates the mouthpiece end 16 with inspection light.

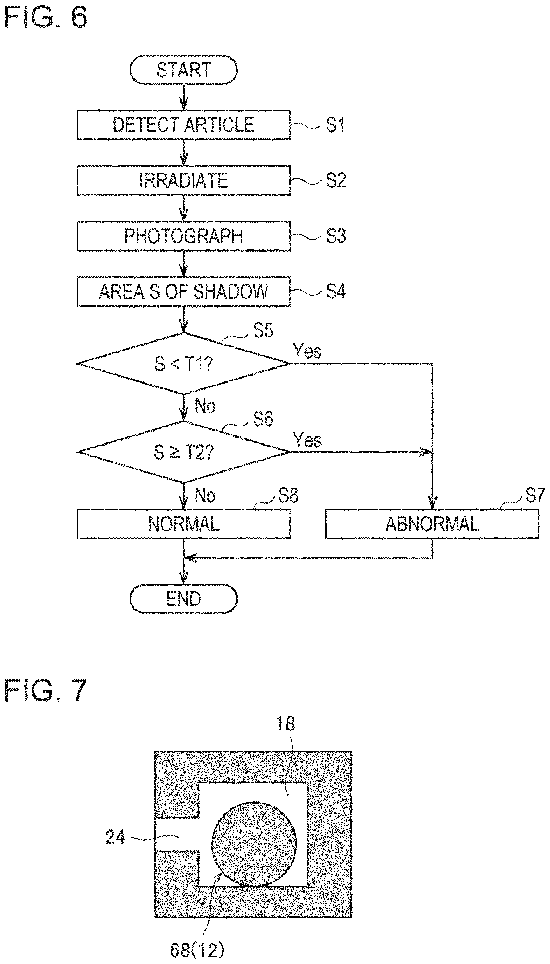

Fig. 6 is a flowchart of an inspection by the inspection device 50. When an inspection of the filter 4 is started, the sensor 56 detects a sending of the article 1 into the transport section 40, and outputs a photographing start signal to the control unit 60 (article detection step S1). Next, the illumination 52 irradiates the mouthpiece end 16 with inspection light in the irradiation direction along the axial direction X (irradiation step S2).

Next, the camera 54 receives the photographing start signal from the sensor 56 through the control unit 60, photographs the peripheral surface of the filter 4 in the photographing direction along the radial direction Y at a timing in which the article 1 that is an inspection object sent into the transport drum 42 is transported to a photographing position P, and transmits photographed image data to the image processing unit 62 (photographing step S3). Next, the image processing unit 62 processes the photographed image transmitted from the camera 54 and detects a shadow of the powder containing material 12 (image processing step S4).

Specifically, in the image processing step S4, the image processing unit 62 calculates an area S of the shadow of the powder containing material 12. Next, the assessment unit 64 assesses the presence or absence and the quality of the powder containing material 12 based on the shadow detected by the image processing unit 62 (assessment steps S5, S6). Specifically, in the assessment step S5, the assessment unit 64 assesses whether or not the area S of the shadow of the powder containing material 12 is less than a predetermined first threshold value T1, that is, assesses whether or not S < T1 holds.

Fig. 7 shows a photographed image when S < T1 does not hold in the assessment step S5. As shown in Fig. 7, a two-dimensional image of a shadow 68 of the powder containing material 12 that is normal is colored black or gray and has a circular outer edge. A first threshold value T1 is set to a value that is equivalent to a projection area of the powder containing material 12. In the assessment step S5, when an assessment result is No and S < T1 does not hold, it is assessed that the powder containing material 12 exists in the cavity 18 and that the powder containing material 12 is not chipped, cracked, or crushed, and the process proceeds to the assessment step S6.

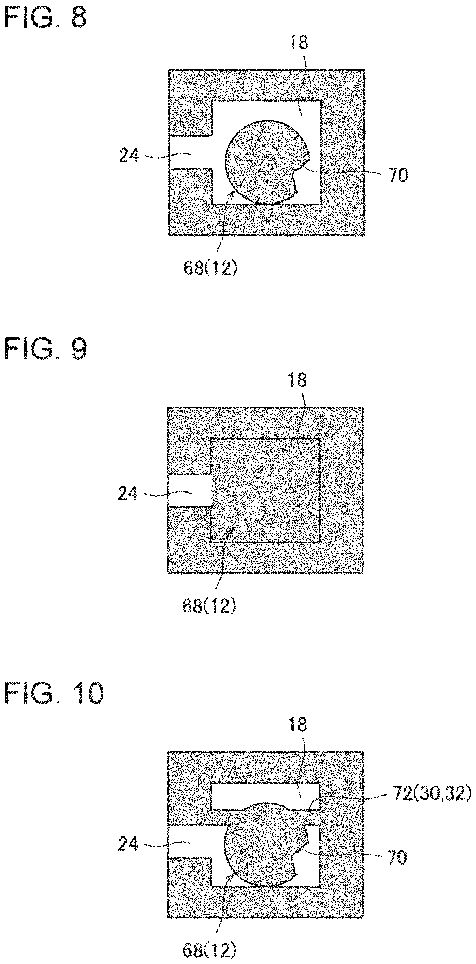

Fig. 8 shows an example of a photographed image when S < T1 holds in the assessment step S5. When an assessment result in the assessment step S5 is Yes, S < T1 holds, and the area S of the shadow 68 is less than the first threshold value T1, as shown in Fig. 8, a missing portion 70 or the like exists in the shadow 68 of the powder containing material 12, and the projection area of the powder containing material 12 is decreased. When the powder containing material 12 does not exist in the cavity 18, the projection area of the powder containing material 12 becomes zero.

In such cases, it is assessed that any one of the following cases, a powder containing material 12 does not exist, the powder containing material 12 is chipped, the powder containing material 12 is cracked, and the powder containing material 12 is crushed, has occurred, and the process proceeds to Step S7. On the other hand, in the assessment step S6, the assessment unit 64 assesses whether or not the area S of the shadow 68 of the powder containing material 12 is greater than or equal to a predetermined second threshold value T2, that is, assesses whether or not S ≥ T2 holds. The second threshold value T2 is set to a value that is at least larger than the projection area of the normal powder containing material 12.

Fig. 9 shows an example of a photographed image when S ≥ T2 holds in the assessment step S6. When an assessment result in the assessment step S6 is Yes, S ≥ T2 holds, and the area S of the shadow 68 is greater than or equal to the second threshold value T2, the powder containing material 12 is crushed to pieces, the powder adheres to an inner wall of the cavity 18, and, as shown in Fig. 9, the area S of the shadow 68 is increased so as to be equivalent to the projection area of the cavity 18.

In this case, it is assessed that the powder containing material 12 is crushed, and the process proceeds to Step S7. In Step S7, any one of the following cases, a powder containing material 12 does not exist, the powder containing material 12 is chipped, the powder containing material 12 is cracked, and the powder containing material 12 is crushed, has occurred, and an output is made that an abnormality has occurred in the powder containing material 12, and the inspection ends. The article 1 in which the powder containing material 12 has been assessed as being abnormal and in which the abnormality has been output is eliminated before being shipped as a product.

On the other hand, in the assessment step S6, when the assessment result is No and S ≥ T2 does not hold, it is assessed that the powder containing material 12 is not crushed and the process proceeds to Step S8. In Step S8, an output is made that the powder containing material 12 is normal, and the inspection ends. In this way, each time the sensor 56 detects an article 1, an inspection of a powder containing material 12 disposed in a filter 4 of the article 1 that is being transported is successively performed in accordance with the inspection flow.

As described above, in the inspection device 50 of the embodiment, the illumination 52 irradiates the mouthpiece end 16 with inspection light in the irradiation direction along the axial direction X. Therefore, the inspection light is transmitted through the powder supply path 24 from the mouthpiece end 16, and the powder containing material 12 disposed in the cavity 18 is directly irradiated with the inspection light. The shadow 68 of the powder containing material 12 is formed by the inspection light with which the powder containing material 12 is irradiated. The camera 54 primarily photographs the peripheral surface of the filter 4 at the cavity 18 where the powder containing material 12 is disposed in the photographing direction along the radial direction Y.

The camera 54 photographs the powder containing material 12 with two paper webs, that is, the outer plug wrapper 20 and the tipping paper 28 in between, and the image processing unit 62 processes a photographed image that has been transmitted from the camera 54 and detects the shadow 68 of the powder containing material 12. In this way, in the present embodiment, the powder containing material 12 is directly irradiated with inspection light that has passed through the powder supply path 24, and obstacles for detecting the shadow 68 of the powder containing material 12 is reduced to two paper webs. Therefore, compared to a related-art inspection using transmitted infrared light, it is possible to obtain a clearer shadow 68 of the powder containing material 12.

The powder containing material 12 disposed in the filter 4 of the article 1 is inspected when the article 1 is in the process of being transported at the transport section 40. Therefore, it is possible to efficiently inspect with high precision in the article 1 the presence or absence and the quality of the powder containing material 12 disposed in the filter 4 and to improve the quality of the filter 4 and thus the article 1.

Specifically, in the assessment step S5, when the area S of the shadow 68 of the powder containing material 12 is less than the first threshold value T1, the assessment unit 64 assesses that the powder containing material 12 is defective due to the occurrence of any one of the following cases, a powder containing material 12 does not exist, the powder containing material 12 is chipped, the powder containing material 12 is cracked, and the powder containing material 12 is crushed. Since the powder containing material 12 is a sphere, the presence or absence and the quality of the powder containing material 12 can be efficiently inspected by such a simple assessment. In the assessment step S6, when the area S of the shadow 68 of the powder containing material 12 is greater than or equal to the second threshold value T2, the assessment unit 64 assesses that the powder containing material 12 has been crushed. Therefore, before shipment, it is possible to reliably eliminate the defective filter 4 in which the powder containing material 12 is already crushed.

The illumination 52 is fixed to the outer side of the outer peripheral surface 48a of the drum shell 48 in the axial direction X, and, in this fixed state, irradiates the mouthpiece end 16 with inspection light. The camera 54 is fixed to the outer side of the outer peripheral surface 48a of the drum shell 48 in the radial direction Y, and, in this fixed state, photographs a peripheral surface of the filter 4 that is on a side opposite to each of the wrap portions 30 and 32 from the radial direction Y. Therefore, it is possible to use the existing transport drum 42 without converting it and set the inspection device 50.

Fig. 10 shows a case in which a shadow 72 of the wrap portion 30 of the outer plug wrapper 20 and a shadow 72 of the wrap portion 32 of the tipping paper 28 appear in a photographed image. The shadow 72 of the wrap portion 30 and the shadow 72 of the wrap portion 32 appear in the photographed image so as to overlap the shadow 68 of the powder containing material 12. Therefore, as shown in Fig. 10, even if there is the missing portion 70 in the shadow 68 of the powder containing material 12, the areas of the shadows 72 of the wrap portions 30 and 32 are added to the area S of the shadow 68 of the powder containing material 12, and S ≥ T1 may hold in the assessment step S5.

In this case, even though there is the missing portion 70 in the powder containing material 12, it may be erroneously assessed that the powder containing material 12 is normal. However, in the present embodiment, the filter 4 is such that each of the wrap portions 30 and 32 facing the side of the outer peripheral surface 48a of the drum shell 48 is held by the outer peripheral surface 48a, and the camera 54 photographs the peripheral surface of the filter 4 that is on a side opposite to each of the wrap portions 30 and 32 from the radial direction Y. Therefore, the shadows 72 of the wrap portions 30 and 32 are prevented from appearing in a photographed image, and erroneous assessments caused by the shadows 72 of the wrap portions 30 and 32 are prevented. Consequently, the inspection precision of the powder containing material 12 is further improved.

The inspection device 50 includes a sensor 56 that detects a sending of the article 1 into the transport drum 42 and outputs a photographing start signal. The camera 54 receives the photographing start signal from the sensor 56, photographs the peripheral surface of the filter 4 at a timing in which the article 1 that is an inspection object sent into the transport drum 42 is transported to the photographing position P. Therefore, it is possible to reliably inspect all the filters 4 of the articles 1 that are successively sent into the transport drum 42.

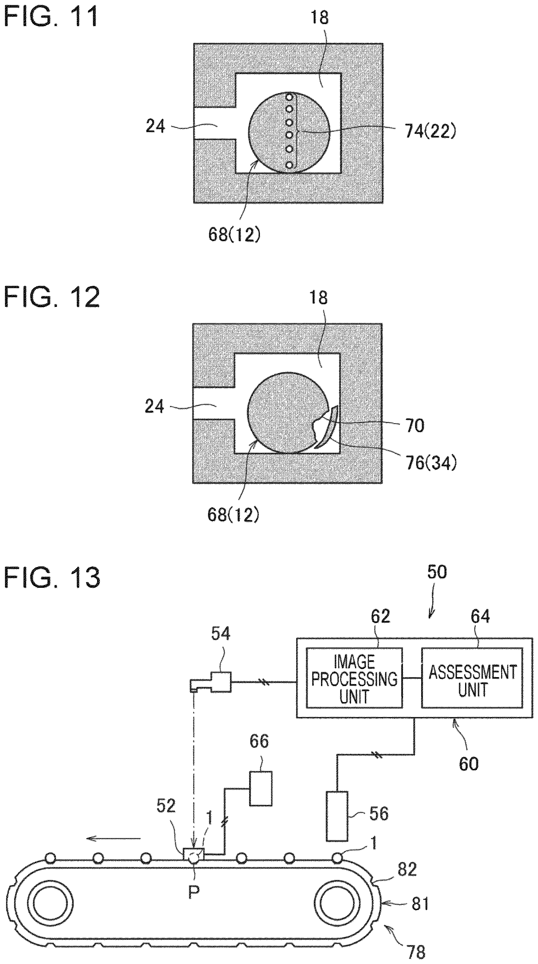

Fig. 11 shows a case in which contours 74 of the vent holes 22 of the filter 4 appear in a photographed image. The contours 74 of the vent holes 22 appear in the photographed image so as to overlap the shadow 68 of the powder containing material 12. Therefore, as shown in Fig. 11, even if the shadow 68 of the powder containing material 12 is normal, the area of a white region on an inner side of each contour 74 is subtracted from the area S of the shadow 68 of the powder containing material 12, and S ≥ T1 may not hold in the assessment step S5.

In this case, even though the powder containing material 12 is normal, the powder containing material 12 is erroneously assessed as being abnormal. However, in the case of the present embodiment, the illumination 52 applies, as inspection light, infrared light including a near infrared ray, which is a predetermined wavelength range. Specifically, the wavelength range of the inspection light is a range in which, though the shadow 68 of the powder containing material 12 appears, the contour 74 of each vent hole 22 does not appear.

More specifically, the wavelength range of the inspection light is preferably 900 µm to 1700 µm, is more preferably 1000 µm to 1600 µm, and is even more preferably 1100 µm to 1500 µm. By also adjusting the light quantity of the inspection light in accordance with the wavelength of the inspection light, it is possible to adjust the photographed image. Therefore, the contours 74 of the vent holes 22 are prevented from appearing in the photographed image, and erroneous assessments caused by the contours 74 of the vent holes 22 are prevented. Consequently, the inspection precision of the powder containing material 12 is further improved.

Fig. 12 shows a case in which a shadow 76 of a part of the logomark 34 of the filter 4 appears in a photographed image. The shadow 76 of the logomark 34 appears in the photographed image so as to be adjacent to the shadow 68 of the powder containing material 12. Therefore, as shown in Fig. 12, even though there is the missing portion 70 in the shadow 68 of the powder containing material 12, the area of the shadow 76 of the logomark 34 is added to the area S of the shadow 68 of the powder containing material 12, and S ≥ T1 may hold in the assessment step S5.

In this case, even though there is the missing portion 70 in the powder containing material 12, the powder containing material 12 is erroneously assessed as being normal. However, in the case of the present embodiment, the illumination 52 applies, as inspection light, infrared light including a near infrared ray, which is a predetermined wavelength range. Specifically, the wavelength range of the inspection light is set to be the aforementioned range in which, though the shadow 68 of the powder containing material 12 appears, the shadow 76 of the logomark 34 does not appear. By also adjusting the light quantity of the inspection light in accordance with the wavelength of the inspection light, it is possible to adjust the photographed image. Therefore, the shadow 76 of the logomark 34 is prevented from appearing in the photographed image, and an erroneous assessment caused by the shadow 76 of the logomark 34 is prevented. Consequently, the inspection precision of the powder containing material 12 is further improved.

Although the description of the embodiment above will be ended, the embodiment is not limitative, and can be variously changed within a scope that does not depart from the spirit of the present invention. For example, the article 1 may be a combustion-heating-type or may be a non-combustion-heating-type. In particular, when the article 1 is a non-combustion-heating-type, a structural element that the upstream filter portion 8 is adjacent to in the axial direction X is not limited to the flavor element 2 and may be a tubular element.

Although the flavor material 6 contains at least a flavor raw material, the flavor material 6 may or may not contain a tobacco raw material, such as shredded tobacco. The filter material 14 is, for example, a filter fiber bundle, such as acetate tow, a filler in which an unwoven fabric sheet is folded, or a filler in which a paper web is gathered. A capsule may be embedded in the filter material 14, activated carbon particles may be added to the filter material 14, or hydrotalcite compound particles may be added to the filter material 14.

The inspection device 50 is not limited to one inspecting the completed article 1, and may be one inspecting the filter 4 of a rod-shaped article that has been molded in a state close to that of the article 1. Specifically, the inspection device 50 may inspect the filter 4 before forming the vent holes 22 in the article 1. The vent holes 22 may be formed in a portion other than the cavity 18, and may be formed in, for example, the upstream filter portion 8.

Even in these cases, in the inspection of the filter 4, since the contours 74 of the vent holes 22 such as those shown in Fig. 11 do not appear in a photographed image, one reason that causes erroneous assessment of the powder containing material 12 in the assessment step S5 is eliminated. The logomark 34 or the like may not be printed near the position of the cavity 18. In this case, since the shadow 76 of a part of, for example, the logomark 34, such as that shown in Fig. 12, does not appear in a photographed image, one reason that causes erroneous assessment of the powder containing material 12 in the assessment step S5 is eliminated.

The filter 4 is held by the outer peripheral surface 48a in an orientation in which each of the wrap portions 30 and 32 is on the side of the outer peripheral surface 48a of the drum shell 48. However, the present invention is not limited thereto, and the filter 4 may be held by the outer peripheral surface 48a in an orientation in which each of the wrap portions 30 and 32 is on the outer side of the drum shell 48 in the radial direction. In this case, the camera 54 is disposed to be fixed to the cylindrical core 46 and photographs a peripheral surface of the filter 4 from the inner side of the transport drum 42. Therefore, the camera 54 is capable of photographing the peripheral surface of the filter 4 on a side opposite to each of the wrap portions 30 and 32 from the radial direction Y.

The inspection device 50 is disposed at the transport section 40 of the article 1 and inspects the filter 4 of the article 1 that is transported to the transport drum 42. However, the present invention is not limited thereto, and, as long as the inspection device 50 is to inspect the filter 4 when the article 1 is in the process of being transported, the inspection device 50 may inspect the filter 4 at another transport device.

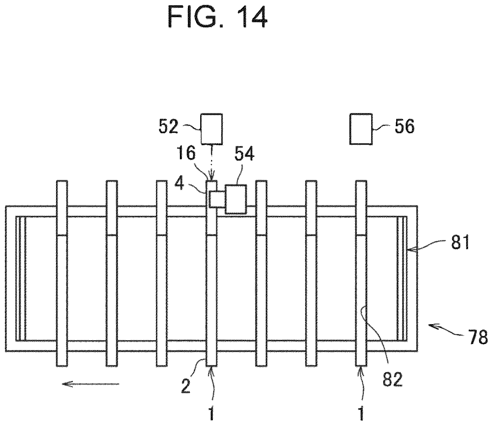

Fig. 13 is a side view of the inspection device 50 disposed at a conveyor device 78 that transports an article 1, and Fig. 14 is a top view of a main portion of Fig. 13. In the conveyor device 78, an article 1 is disposed in a groove portion 82 extending in a width direction of a transport belt 81 and transports the article 1 along a travel direction, indicated by an arrow, of the transport belt 81. Even in this case, as shown in Figs. 13 and 14, the illumination 52 irradiates the mouthpiece end 16 with inspection light in the irradiation direction along the axial direction X, and the camera 54 photographs a peripheral surface of the filter 4 in the photographing direction along the radial direction Y to make it possible to inspect the filter 4 in the same way as the case shown in Fig. 3.

The inspection device 50 is not limited to being capable of inspecting the powder containing material 12 and is capable of inspecting shapes of various solid materials disposed in the filter 4. For example, the inspection device 50 can be applied to an inspection of flavoring agent beads whose flavor is volatilized as the article 1 is inhaled. In this case, the powder supply path 24 is used as a communication path for inhaling the flavor of the flavoring agent beads.

The inspection device 50 includes a sensor 56 that detects a sending of the article 1 into the transport drum 42, and outputs a photographing start signal. However, the present invention is not limited thereto, and when the article 1 is in the process of being transported by the transport drum 42 or the conveyor device 78, instead of a sending of the article 1 into the transport drum 42, the rotation of the transport drum 42 or the movement of the transport belt 81 may be detected by an encoder. In this case, a detection signal of the encoder is used as the photographing start signal.

### Reference Signs List

- 1: flavor inhalation article
- 2: flavor element
- 4: filter
- 8: upstream filter portion
- 10: downstream filter portion
- 12: powder containing material (solid material)
- 16: mouthpiece end
- 18: cavity
- 20: outer plug wrapper (wrapper)
- 24: powder supply path (communication path)
- 28: tipping paper (wrapper)
- 30, 32: wrap portion
- 40: transport section
- 42: transport drum
- 44: suction source
- 46: cylindrical core
- 48: drum shell
- 48a: outer peripheral surface
- 50: inspection device
- 52: illumination
- 54: camera
- 56: sensor
- 62: image processing unit
- 64: assessment unit
- 68: shadow of powder containing material
- S: area of shadow of powder containing material
- P: photographing position
- Ra: rotational axis
- T1: first threshold value
- X: axial direction
- Y: radial direction

## Claims

1. An inspection device for a filter, which is an inspection device that inspects the filter that is provided at a flavor inhalation article,
wherein the filter includes a mouthpiece end, a solid material, and a communication path that communicates with the solid material and opens to the mouthpiece end, and
wherein the inspection device comprises:
an illumination that irradiates the mouthpiece end with inspection light in an irradiation direction along an axial direction of the filter;
a camera that photographs a peripheral surface of the filter in a photographing direction along a radial direction of the filter;
an image processing unit that processes an image photographed by the camera and detects a shadow of the solid material; and
an assessment unit that assesses presence or absence and a quality of the solid material based on the shadow detected by the image processing unit.

2. The inspection device for the filter according to claim 1,
wherein the image processing unit calculates an area of the shadow, and
wherein the assessment unit assesses that the solid material is absent or defective when the area of the shadow is less than a predetermined first threshold value.

3. The inspection device for the filter according to claim 2,
wherein the assessment unit assesses that the solid material is defective when the area of the shadow is greater than or equal to a predetermined second threshold value.

4. The inspection device for the filter according to any one of claims 1 to 3,
wherein the inspection device inspects the filter at a transport section that transports the flavor inhalation article,
wherein the transport section includes a transport drum that transports the flavor inhalation article, and
wherein the transport drum includes
a cylindrical core in whose interior a suction source is disposed, and
a drum shell that covers the cylindrical core, is disposed so as to be rotatable around a rotational axis as a center with respect to the cylindrical core, and holds by suction pressure of the suction source the flavor inhalation article at an outer peripheral surface of the drum shell in an orientation in which the axial direction is parallel to the rotational axis.

5. The inspection device for the filter according to claim 4,
wherein the filter includes a wrap portion where a wrapper covers a peripheral surface of the filter,
wherein the filter is held by the outer peripheral surface in an orientation in which the wrap portion is on a side of the outer peripheral surface of the drum shell, and
wherein the illumination is fixed to an outer side of the outer peripheral surface of the drum shell in the axial direction and irradiates the mouthpiece end with the inspection light.

6. The inspection device for the filter according to claim 4 or claim 5,
wherein the camera is fixed to an outer side of the outer peripheral surface of the drum shell in the radial direction and photographs a peripheral surface of the filter that is on a side opposite to the wrap portion from the radial direction.

7. The inspection device for the filter according to any one of claims 4 to 6,
wherein the inspection device includes a sensor that detects a sending of the flavor inhalation article into the transport drum, and outputs a photographing start signal, and
wherein the camera receives the photographing start signal from the sensor and photographs the peripheral surface of the filter at a timing in which the flavor inhalation article that is an inspection object sent into the transport drum is transported to a photographing position.

8. The inspection device for the filter according to any one of claims 1 to 7,
wherein the illumination applies, as the inspection light, infrared light including a near infrared ray, which is a predetermined wavelength range.

9. The inspection device for the filter according to any one of claims 1 to 8,
wherein the filter includes
an upstream filter portion,
a downstream filter portion in which the mouthpiece end is formed,
a powder containing material in which raw material powder containing at least one of a taste component and a flavor component is molded into one lump, that becomes powder when an external force is applied, and that serves as the solid material,
a cavity in which the powder containing material is disposed between the upstream filter portion and the downstream filter portion, and
a powder supply path that is formed in the downstream filter portion, causes the cavity and the mouthpiece end to communicate with each other, allows the powder to be supplied from the cavity to the mouthpiece end, and serves as the communication path,
wherein the inspection device photographs, by using the camera, a peripheral surface of the filter at the cavity in the photographing direction along the radial direction of the filter.

10. An inspection method for a filter, which is an inspection method of inspecting the filter that is provided at a flavor inhalation article,
wherein the filter includes a mouthpiece end, a solid material, and a communication path that communicates with the solid material and opens to the mouthpiece end, and
wherein the inspection method comprises:
an irradiation step of irradiating the mouthpiece end with inspection light in an irradiation direction along an axial direction of the filter;
a photographing step of photographing a peripheral surface of the filter in a photographing direction along a radial direction of the filter;
an image processing step of processing an image photographed in the photographing step and detecting a shadow of the solid material; and
an assessment step of assessing presence or absence and a quality of the solid material based on the shadow detected in the image processing step.

11. The inspection method for the filter according to claim 10,
wherein, in the image processing step, an area of the shadow is calculated, and
wherein, in the assessment step, the solid material is assessed as being absent or defective when the area of the shadow is less than a predetermined first threshold value.

12. The inspection method for the filter according to claim 11,
wherein, in the assessment step, the solid material is assessed as being defective when the area of the shadow is greater than or equal to a predetermined second threshold value.

13. The inspection method for the filter according to any one of claims 10 to 12,
wherein, in the inspection method, the filter is inspected when the flavor inhalation article is in a process of being transported,
wherein the filter includes a wrap portion where a wrapper covers a peripheral surface of the filter, and
wherein, in the photographing step, a peripheral surface of the filter that is on a side opposite to the wrap portion in the radial direction is photographed.

14. The inspection method for the filter according to any one of claims 10 to 13,
wherein, in the photographing step, a photographing start signal that is output based on a sending-in of the flavor inhalation article is received, and a peripheral surface of the filter is photographed at a timing in which the flavor inhalation article that is an inspection object that has been sent in is transported to a photographing position.

15. The inspection method for the filter according to any one of claims 10 to 14,
wherein, in the irradiation step, as the inspection light, infrared light including a near infrared ray, which is a predetermined wavelength range, is applied.
